# EUROPÄISCHE PATENTSCHRIFT

(11) **EP 1 127 851 B1**
(45) Veröffentlichungstag und Bekanntmachung des Hinweises auf die Patenterteilung: **14.09.2005**
(21) Anmeldenummer: 01104378.3
(22) Anmeldetag: 23.02.2001
(51) Int. Cl.: C03B 5/225, C03B 5/187, C03B 5/193

(54) **Verfahren und Vorrichtung zur Sauerstoffläuterung von Glasschmelzen**
Process and apparatus for refining molten glass using oxygen
Procédé et dispositif d'affinage du verre en fusion au moyen d'oxygène

(30) Priorität: 28.02.2000 DE 10009425
(43) Veröffentlichungstag der Anmeldung: 29.08.2001
(73) Patentinhaber: Schott AG, 55122 Mainz (DE)
(72) Erfinder: Röth, Gernot, 55278 Dalheim (DE); Pfeiffer, Thomas, Dr., 55128 Ingelheim (DE); Duch, Klaus-Dieter, Dr., 55411 Bingen (DE)
(74) Vertreter: Fuchs Mehler Weiss & Fritzsche

(56) Entgegenhaltungen:
- DE-A- 3 906 270
- PATENT ABSTRACTS OF JAPAN vol. 014, no. 211 (C-0715), 2. Mai 1990 (1990-05-02) & JP 02 048422 A (TANAKA KIKINZOKU KOGYO KK), 19. Februar 1990 (1990-02-19)

## Beschreibung

Die Erfindung betrifft ein Verfahren zur Sauerstoffläuterung von Wasser und/oder Hydroxylgruppen enthaltenden Glasschmelzen, eine Vorrichtung hierzu, sowie die Verwendung des hierdurch erhaltenen Glases.

Bei vielen technischen Produktions-Prozessen sind Flüssigkeiten beteiligt, in denen Gase gelöst sind, die zum Teil Bläschen in der Flüssigkeit bilden. Da diese Gase bzw. GasBläschen bei der weiteren Bearbeitung stören bzw. die Eigenschaften und damit die Qualität des herzustellenden Produktes nachteilig beeinträchtigen können, ist es notwendig, die Flüssigkeit von diesen Gasbläschen zu befreien. Dieser Vorgang wird als Entblasen oder Läutern bezeichnet.

Im folgenden soll die Problematik des Läuterns einer Glasschmelze beschrieben werden.

Bei der Herstellung von Gläsern aus anorganischen Materialien werden in einem kontinuierlich verlaufenden Verfahren Rohstoffe, und zwar üblicherweise Quarzsand, Soda, Kalkstein, Marmor oder Kalkmergel, gemischt und eingeschmolzen. Dabei läuft der Schmelzvorgang in verschiedenen Phasen ab, in denen chemische Reaktionen und physikalische Vorgänge zum Teil nebeneinander stattfinden. Bei höheren Temperaturen finden auch Festkörperreaktionen an den Kontakten der sich berührenden Korngrenzen statt. Darüber hinaus wird CO₂ und H₂O aus den Kristallen freigesetzt. Dabei entsteht das CO₂ durch Zersetzungsreaktionen der glasbildenden Salze. Sofern Sulfate vorhanden sind wird auch SO₂ freigesetzt.

Beim Schmelzen von Glas entstehen somit als Folge des Zerfalls der Ausgangsstoffe, des Gemenges, beachtliche Mengen an Gasen. Eine grobe Schätzung besagt, dass man aus 1,2 kg Gemenge etwa 1 kg Glas erschmilzt, d.h. dass während des Einschmelzens ca. 1/6 des Gemengegewichts in Form von Gas freigesetzt werden. Darüber hinaus werden auch andere Gase durch das Gemenge mitgeführt oder durch Verbrennungsöfen in das schmelzende Glas eingetragen.

Die Freisetzung von Gasen insbesondere von CO₂ bewirkt bereits eine gute Vormischung der Glasschmelze. Die Gasentwicklung und damit das Vormischen ist bei Temperaturen von ca. 800°C bis 1100°C abgeschlossen.

Das meiste Gas entweicht zwar während des anfänglichen Aufschmelzens des Glases, jedoch wird ein beachtlicher Teil des Gases in der Schmelze eingefangen. Ein Teil des eingefangenen Gases wird in der Glasschmelze gelöst, der andere Teil verbleibt als örtliche Gaseinschlüsse, als sogenannte Blasen, in der Schmelze. Dabei wachsen oder schrumpfen die Blasen, wenn der Blaseninnendruck höher oder niedriger ist als der Gleichgewichtsdruck der gelösten Gase. Die Gasblasen haben dabei eine unterschiedliche Größe.

Die dabei erhaltene Schmelze wird auch als Rauhschmelze bezeichnet. Sie weist jedoch noch starke Schlieren und viele Blasen auf, was die Qualität eines aus der Glasschmelze hergestellten Glas- bzw. Glaskeramikkörpers nachteilig beeinträchtigt. Aus diesem Grund wird die noch stark schlierige und blasenhaltige Glasschmelze weiter erhitzt, mittels mechanischen Rührorganen, durch Zerhacken mit feinen Nadeln und/oder durch das Einblasen von Sauerstoff mittels feinen Düsen homogenisiert und von den Gasblasen geläutert.

Unter dem Läutern von Glas versteht man daher einen dem Aufschmelzvorgang in sogenannten Läuterungskammern nachgeschalteten Schmelzverfahrensschritt, der
- eine weitgehende Beseitigung von Gasblasen definierter Größenklassen und
- eine gezielte Einstellung des Gasgehalts der Glasschmelze sicherstellt und dabei gleichzeitig
- in eine komplexe Abfolge von Schmelzprozeßschritten zu integrieren ist.

Die Läuterung des Glases ist demnach von höchster Bedeutung für die Qualität des am Ende des Schmelzprozesses vorliegenden Produkts.

Für das Läutern haben sich in bekannter Weise verschiedene Methoden herausgebildet.

Die Gasblasen haben von Hause aus durch ihren statischen Auftrieb das Bestreben, in der Schmelze aufzusteigen und dann ins Freie zu entweichen. Dieser Vorgang würde ohne äußere Einflüsse jedoch eine beträchtliche Zeit brauchen, die den Produktionsprozess wegen langer Standzeiten verteuern würde. Es ist daher bekannt, in der Läuterungszone höhere Temperaturen zu erzeugen, um so die Viskosität der Schmelze und damit de Aufstiegsgeschwindigkeit der Gasblasen zu erhöhen, sowie um den Blasendurchmesser zu vergrößern. Diese zusätzliche Temperaturerhöhung erfordert allerdings eine beachtliche Energie, was ebenfalls die Produktionskosten stark erhöht.

Bewährt und weitgehend optimiert ist auch das chemische Läutern von Glas. Dabei werden der Schmelze chemische Läutermittel und zwar Oxide mit temperaturabhängigen Oxidationsstufen zugesetzt. Übliche Läutermittel sind Sb(V)-Oxid, As(V)-Oxid und Sn(IV)-Oxid. Durch die Freisetzung von durch Läuterungsmittel in situ erzeugtem Sauerstoff oder auch durch zusätzliche mechanische Gaseinleitung mittels feiner Düsen wird eine erhöhte Durchmischung der Schmelze und damit eine bessere Homogenisierung erreicht. Darüber hinaus bewirkt die zusätzliche Freisetzung von Sauerstoff eine Vergrößerung von in der Glasschmelze bereits vorliegenden kleinen Gasblasen.

Bei der chemischen Läuterung werden somit kleine Blasen mit dem Läutergas O₂ aufgepumpt, das aus den Läutermitteln entsteht, wodurch diese schneller in der Schmelze aufsteigen. Das Läutern führt somit auch zu einer Entfernung von Gaseinschlüssen, was zu einem höherwertigen Glasprodukt führt.

Das chemische Läutern besteht letztlich aus einer Abfolge zeitlich und räumlich miteinander verwobener Elementarschritte. Zunächst werden die in der Rauhschmelze fein dispergierten Blasen durch das Läutergas O₂ so stark aufgebläht, dass eine drastische Verkürzung der Aufstiegszeiten eintritt. Gleichzeitig extrahieren die Läuterblasen die im Glas gelösten Gase. In abschließenden Abkühlschritten findet eine möglichst vollständige Resorption der unvermeidlichen Restblasen statt. Als Zielgrößen für eine gelungene Einstellung des Gasgehalts im Glas gelten u.a. Farbe, Wassergehalt und die sog. Reboilbedingungen von O₂ und SO₂. Eine einmal erreichte befriedigende Blasenqualität darf sich im Absteh- oder Formgebungsprozess nicht wieder verschlechtern.

Das chemische Läutern hat einige prinzipbedingte Nachteile. Zum einen funktioniert die Methode nicht für jedes Glassystem, insbesondere bei der NaCl-Läuterung, oder nur bei hoher Temperatur, des weiteren benötigt der Läutervorgang viel Zeit, da die Gasdiffusion in der Schmelze zu langsam verläuft, weshalb die Läuterkammern eine relativ große Ausdehnung haben müssen, was wiederum die Produktionskosten erhöht. Schließlich ändern auch die chemischen Läutermittel die Chemie des Glases und damit dessen Eigenschaften. Darüber hinaus ist z.B. Arsenoxid äußerst giftig und in der benötigten Reinheit nicht ohne weiteres kommerziell erhältlich. Auch wirft sowohl dessen Herstellung als auch dessen Verwendung große Umweltprobleme auf. Dies trifft auch für Antimonoxid zu. Ceroxid selbst ist zwar nicht giftig, es ist jedoch äußerst teuer, so dass sich dessen Einsatz nur auf besondere Gläser beschränkt.

Wegen dieser Nachteile sind auch sog. physikalische Läuterverfahren bekannt geworden, die die Chemie des Glases unbeeinträchtigt lassen. Das physikalische Läutern einer Glasschmelze beruht darauf, dass Blasen mit physikalischen Methoden "gezwungen" werden, an die Oberfläche der Schmelze aufzusteigen, dort zerplatzen und ihren Gasinhalt freigeben oder dass sie sich in der Schmelze auflösen.

Die DE-A-3 022 091 beschreibt eine Vorrichtung zum Herstellen von geschmolzenem Glas in einem Schmelzofen mit einem Refiner zum Läutern des Glases und wenigstens einem Vorherd, wobei ein Gleichstrom an sonst mit Wechselstrom betriebenen Heizelektroden angelegt wird.

In der DE-A-3 906 270 ist ein Verfahren und eine Vorrichtung zum Schmelzen von solchen Gläsern beschrieben, die im geschmolzenen Zustand eine hohe Reduktionswirkung aufweisen. Damit soll insbesondere bei Phosphatglas, dessen reduzierende Wirkung im geschmolzenen Zustand sogar besonders ausgeprägt ist, eine Erosion von in die Schmelze eingetauchten Platinteilen vermieden werden. Die Reduktionswirkung von Phosphatglas ist nämlich so stark ausgeprägt, dass das Glas mit Platin oder einer Platinlegierung des Schmelzgefäßes zu einer Platinphosphorlegierung reagiert. Diese Platinphosphorlegierung weist jedoch einen Schmelzpunkt von 588°C auf, also weit unterhalb der Glasschmelztemperatur, was dazu führt, dass diese sich in der Glasschmelze auflöst und damit auch die Platinwanne. Das gleiche gilt beispielsweise auch für Rührelemente aus Platin. Dies wird gemäß dieser Druckschrift dadurch vermieden, dass die Umgebung des Schmelztiegels, d.h. dessen Außenfläche, mit Sauerstoff versorgt wird. Dadurch wird die innere Oberfläche, die in Kontakt mit der Glasschmelze steht, durch eine sauerstoffreiche Glasschicht geschützt. Dadurch wird die Verwendung von Platintiegeln möglich, wodurch ein Glas ohne die Verwendung von einem keramischen Schmelzgefäß, welches die optische Qualität des Glases verschlechtert, erhalten werden kann. Bei diesem Verfahren müssen jedoch solche Bedingungen gewählt werden, bei denen die Sauerstoffpermeabililtät des Platingefäßes sichergestellt ist, was mittels einer Temperaturerhöhung erreicht wird.

Aus der US-A-5,785,726 ist es bekannt, Gläser für flache Bildschirme, insbesondere LCDs (Liquid Crystal Display) und TFTs (Thin Film Transistors) herzustellen, wobei insbesondere im Abstandsbereich das Entstehen von Sauerstoffblasen, das sogenannte "O₂-Reboil", dadurch vermieden wird, dass Platinteile des Abstandsbereichs zumindest teilweise mit Wasserstoff gespült werden. Auf diese Weise wird der in der Glasschmelze vorliegende Sauerstoff durch die Wasserstoff-durchlässige Platinwanne zu Wasser reduziert, wobei Sauerstoffgasblasen aufgelöst werden.

Die Erfindung hat nun zum Ziel, ein verbessertes Verfahren zur Läuterung und Homogenisierung von Glasschmelzen bereitzustellen, bei dem auf die Zugabe von chemischen Läutermitteln, wie Arsenoxid, Antimonoxid und Ceroxid verzichtet werden kann.

Dieses Ziel wird erfindungsgemäß durch das in den unabhängigen Ansprüchen beschriebene Verfahren, sowie der Vorrichtung zur Durchführung des Verfahrens und der Verwendung eines so erhaltenen Glases erzielt.

Überraschenderweise wurde nun gefunden, dass obwohl Edelmetalle nicht sauerstoffdurchlässig sind, beim Durchleiten von Sauerstoff durch eine in eine wasserhaltige bzw. Hydroxylgruppen enthaltende Glasschmelze eingetauchte Einrichtung mit einer Edelmetallhülle, wie z.B. einem Edelmetallrohr, eine heftige Entwicklung von Sauerstoffblasen erfolgt. Diese Gasentwicklung ist so stark, dass die Glasschmelze durch die heftige Blasenentwicklung sehr gut durchgemischt wird. Dadurch werden die vorliegenden Schlieren aufgelöst und vorhandene kleine Gasblasen "aufgepumpt", so dass diese schneller aufsteigen. Das Einleiten von Sauerstoff in ein Platinrohr und die dadurch einhergehende starke Sauerstoffblasenentwicklung führt somit auch zu einer Entfernung der Gaseinschlüsse der Schmelze.

Auf diese Weise ist es möglich, auf teure und/oder giftige chemische Läutermittel zu verzichten. Es lassen sich daher mit dem erfindungsgemäßen Verfahren Gläser von hoher definierter Reinheit herstellen, welche frei sind von Gaseinschlüssen, sowie frei von durch das Läutern eingeführten zusätzlichen Fremdstoffen.

Das erfindungsgemäße Verfahren ist auch zur Entfernung von Wasserresten und/oder Hydroxylresten geeignet.

Darüber hinaus lässt sich der Prozess durch Regelung des Sauerstoffgehaltes bzw. Partialdruckes des Gasstromes sehr gut steuern. Es hat sich auch gezeigt, dass dieses Verfahren nicht auf eine bestimmte Temperatur beschränkt ist, wie dies bei vielen chemischen und anderen physikalischen Läuterprozessen notwendig ist.

Als Edelmetallteile eignen sich prinzipiell alle Metalle, die insbesondere bei den in einer Glasschmelze auftretenden Bedingungen wasserstoffdurchlässig sind, d.h. einen hohen Wasserstoff-Diffusionskoeffizienten aufweisen. Hierzu gehören Platin sowie alle Metalle der Platingruppe, Gold, Rhenium sowie Legierungen davon. Erfindungsgemäß sind hierunter auch andere Materialien zu verstehen, welche bei den Verfahrenstemperaturen stabil sind und die eine Brücke aus derartigen Edelmetallen zwischen der Rohr- oder Wanneninnenseite und den der Glasschmelze zugewandten Außenseiten aufweisen. Derartige Brücken können beispielsweise durch Netzwerke oder durch Fasern etc. gebildet werden. Als Edelmetallelemente kann auch der Platintiegel bzw. die Platinwanne selbst verwendet werden. Dabei wird allerdings lediglich derjenige Bereich der Schmelzwanne mit Sauerstoff beaufschlagt, in dem die Läuterung stattfindet. In einer weiteren bevorzugten Ausführungsform wird ein Edelmetallrohr, insbesondere im Bereich in dem der Läuterschritt stattfindet, angeordnet. Vorzugsweise verläuft das Rohr am Wannenboden. Es hat sich als zweckmäßig erwiesen, derartige Rohre meanderförmig vorzugsweise im gesamten Läuterbereich anzuordnen. In einigen Fällen hat es sich jedoch als ausreichend erwiesen, nur an einer einzigen Stelle im Läuterbereich ein solches sauerstoffgespültes Edelmetallrohr anzubringen. In seiner einfachsten Ausführungsform besteht das sauerstoffgespülte Edelmetallrohr aus einem einfachen U-förmigen Rohr, welches derart in der Schmelze angeordnet ist, dass es entweder von oben in die Schmelze eintaucht oder durch die Schmelzwanne von unten durchgeführt wird. In beiden Fällen verläuft der waagerechte Teil des U-förmigen Rohres am Wannenboden entlang oder in kurzem Abstand über diesen hinweg.

In einer weiteren bevorzugten Ausführungsform umfasst das Edelmetallelement einen mit Sauerstoffgas spülbaren Rührer. Auf diese Weise lassen sich die Vorteile miteinander verbinden, die ein mechanisches Rühren der Schmelze sowie das Durchmischen mittels aufsteigenden Gasen ergeben, was zu einer besonders effizienten Homogenisierung und Läuterung führt.

Bevorzugte sauerstoffhaltige Gase zum Spülen der Edelmetallelemente sind Luft sowie sauerstoffhaltige Abluft von Verfahrensgasen, wie z.B. Abgasen von Brennern, insbesondere Gas- und Ölbrennern. Prinzipiell ist es auch möglich reinen Sauerstoff zu verwenden.

In einer weiteren bevorzugten Ausführungsform wird die Sauerstoffzufuhr mittels einem Steuerelement geregelt. Dies geschieht vorzugsweise dadurch, dass der Sauerstoffpartialdruck der Schmelze mittels einer Sonde bestimmt wird, wie sie beispielsweise von Frey, Schaeffer und Baucke in Glastechn.Ber. 53 (1980), Seite 116 - 123 ausführlich beschrieben ist. Mittels des mit der Sonde bestimmten Wertes kann nun die Sauerstoffzufuhr im Edelmetallelement mittels einer Steuereinrichtung genau geregelt werden. Da durch die Sauerstoffläuterung auch andere Gase wie CO₂ oder auch SO₂ entfernt werden, ist es auch möglich, die Sauerstoffzufuhr durch entsprechende SO₂- oder CO₂-Sonden zu steuern.

In einer weiteren erfindungsgemäßen Ausführungsform wird der durch das erfindungsgemäße Läuterungsverfahren in die Glasschmelze eingetragene Sauerstoff in einem der Läuterung nachgeschalteten Verfahrensschritt wieder entfernt. Dies kann beispielsweise neben den bekannten physikalischen Verfahren, wie beispielsweise dem Arbeiten unter Unterdruck, geschehen. Dabei wird durch Anlegen eines geringeren Druckes der gelöste Sauerstoff bzw. noch vorhandene winzige, häufig nicht sichtbare Gasblasen vergrößert, so dass diese schnell zur Oberfläche der Schmelze aufsteigen. Eine weitere Möglichkeit besteht darin, die Schmelze in einem solchen Verfahrensschritt mittels Druck zu beaufschlagen, was zum sogenannten "Abdrücken" der Gasblasenbildung führt.

Besonders bevorzugt ist es erfindungsgemäß jedoch, in einem späteren Verfahrensschritt ein weiteres wasserstoffdurchlässiges Edelmetallelement anzuordnen und dieses mit Wasserstoff, wasserstoffhaltigen Gasen oder mit Gasen und/oder Dämpfen, die bei höherer Temperatur Wasserstoff abspalten, wie Wasserdampf oder Ammoniak zu beaufschlagen. Auf diese Weise wird noch in der Schmelze vorhandener Sauerstoff zu Wasser oder zu Hydroxylgruppen reduziert, welche in der Glasschmelze sowie im fertigen Glas löslich sind und keinen nennenswerten Einfluss auf die Glasqualität zeigen. Vorzugsweise wird die Wasserstoffzufuhr ebenfalls mittels eines Steuerelementes geregelt. Das Steuerelement selbst empfängt seine Steuersignale von einer in diesem Bereich der Glasschmelze eintauchenden Sauerstoffsonde.

Vorzugsweise wird der Sauerstoff im Abstehbereich entfernt. Dies bedeutet, dass das entsprechende Edelmetallelement in diesem Bereich angeordnet ist. Das Edelmetallelement kann in sämtlichen Formen ausgestaltet sein, wie dies beispielsweise zuvor für das sauerstoffgespülte Element beschrieben ist. Ein weiterer bevorzugter Ort zur Entfernung von Sauerstoff ist die sogenannte Speiserrinne.

Die Erfindung betrifft auch eine Vorrichtung zur Durchführung des Verfahrens. Die erfindungsgemäße Vorrichtung umfasst einen Bereich, in dem die Glasschmelze mit einem Edelmetallelement in Kontakt steht, wobei das Edelmetallelement eine der Glasschmelze zugewandten Seite und eine der Schmelze abgewandte mit Sauerstoff beaufschlagbare Seite bzw. Oberfläche aufweist. In einer besonderen Ausführungsform ist dieser Bereich der Wannenboden, in dem die Glasschmelze geläutert wird. In einer weiteren bevorzugten Ausführungsform ist das Edelmetallelement ein mechanischer Rührer, dessen Innenseite mit dem Sauerstoffgas gespült werden kann.

Die mit dem erfindungsgemäßen Verfahren erhaltenen Gläser eignen sich insbesondere zur Herstellung von elektronischen Röhren wie Bildschirme, insbesondere Fernsehapparate und Computermonitore, sowie für Flachbildschirme wie LCDs und TFTs. Auch für die Herstellung von optischen Linsen sowie Geräten und Vorrichtungen, die solche optischen Linsen enthalten, sind die erfindungsgemäß hergestellten Gläser besonders geeignet. Weitere bevorzugte Verwendungsgebiete sind Lampengläser, wobei hier sowohl das Glas für eine Lampe als auch für das Leuchtmittel selbst gemeint ist, als auch die Verwendung zur Herstellung von Kochfeldern für Herde, wie beispielsweise Ceran^{R}-Felder, als auch für Kochgeschirr (Jenaerglas^{R}) und für Mikrowellengeschirr.

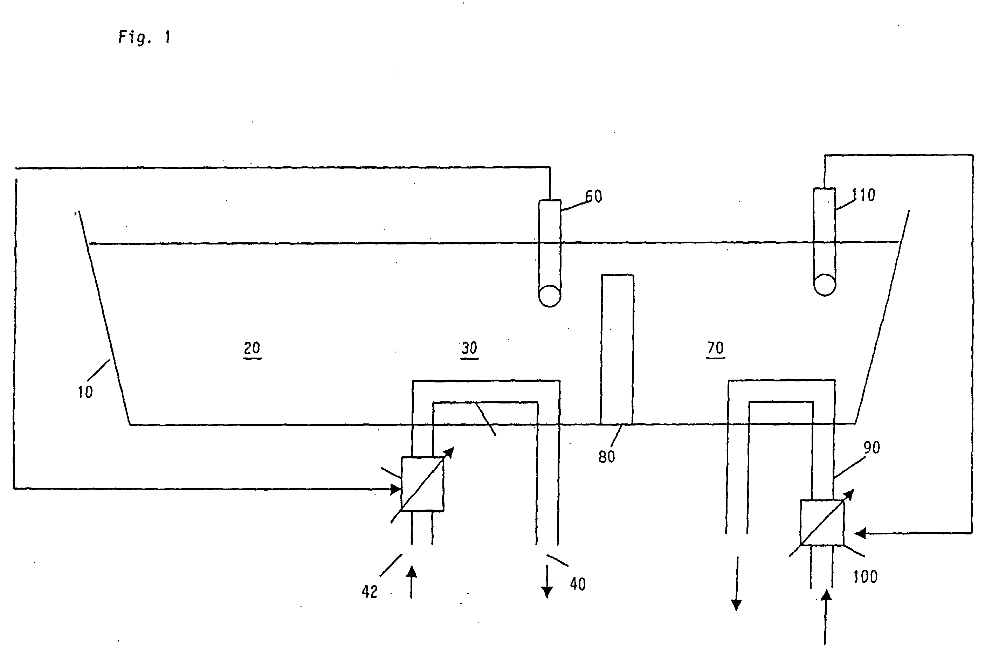

Die Erfindung soll anhand der Figur 1 erläutert werden. Figur 1 zeigt eine Glasschmelzwanne 10, an deren linken Seite Glasrohware, d.h. recyceltes Glas und/oder die zur Glasherstellung verwendeten Minerale, wie Quarz, Soda, Kalk, Marmor etc. in feinstverteiltem bzw. feinstvermahlenem Schüttgut eingetragen werden. Im darauf folgenden Schmelzbereich 20 wird der Feststoff aufgeschmolzen und fließt dann weiter in den Läuterbereich 30 der Wanne 10. Im Läuterbereich 30 befindet sich ein am Boden angeordnetes Edelmetallrohr 40, welches eine Sauerstoffzuführleitung 42 und eine Wasserdampfableitung 44 umfasst. Die Sauerstoffzufuhr 42 wird mittels einer Steuereinrichtung 50 geregelt, welche ihre Steuersignale von einer in dem Läuterbereich 30 der Glasschmelze eingetauchten Sauerstoffsonde 60 empfängt. Der Aufschmelzbereich 20 und der Läuterbereich 30 der Wanne 10 wird vom Abstandsbereich 70 mittels einer Trennwand 80 getrennt, welche nicht bis zur Oberfläche der Glasschmelze reicht. Im Abstehbereich 70 befindet sich ein mit Wasserstoff, Wasserdampf oder Mischungen davon mit anderen Gasen gespültes Edelmetallrohr 90, welches analog dem Sauerstoffrohr 40 ausgebildet ist. Die Wasserstoffzufuhr in das Rohr 90 wird mittels einer zweiten Steuereinrichtung 100 geregelt, die ihre Steuersignale von einer zweiten Sauerstoffsonde 110 empfängt, welche im Abstehbereich 70 oder danach angeordnet ist.

## Patentansprüche

1. Verfahren zur Herstellung von Glas, bei dem geschmolzenes, wasserhaltiges und/oder Hydroxylgruppen enthaltendes Glas in Wannen (10) mit Sauerstoff geläutert wird, **dadurch gekennzeichnet, dass** man in der Glasschmelze mindestens ein Edelmetallelement (40) anordnet, das eine der Schmelze zugewandte glasseitige äußere Oberfläche und eine der Glasschmelze abgewandte mit Gas beaufschlagbare innere Oberfläche aufweist und man die der Glasschmelze abgewandte Oberfläche mit Sauerstoff oder einem sauerstoffhaltigen Gasgemisch beaufschlagt.

2. Verfahren nach Anspruch 1, **dadurch gekennzeichnet, dass** als Edelmetallelement (40) die Schmelzwanne (10) selbst verwendet wird.

3. Verfahren nach einem der vorhergehenden Ansprüche, **dadurch gekennzeichnet, dass** das Edelmetallelement (40) mindestens ein unmittelbar über den Wannenboden angeordnetes Rohr umfasst.

4. Verfahren nach einem der vorhergehenden Ansprüche, **dadurch gekennzeichnet, dass** als Edelmetallelement (40) ein gasspülbarer Rührer verwendet wird.

5. Verfahren nach einem der vorhergehenden Ansprüche, **dadurch gekennzeichnet, dass** als Edelmetall Platin, Elemente der Platingruppe, Gold, Rhenium sowie Legierungen davon verwendet wird, die einen ausreichend hohen Wasserstoff-Diffusionskoeffizienten aufweisen.

6. Verfahren nach einem der vorhergehenden Ansprüche, **dadurch gekennzeichnet, dass** das Läutern ohne chemische Läutermittel durchgeführt wird.

7. Verfahren nach einem der vorhergehenden Ansprüche **dadurch gekennzeichnet, dass** die durch das Sauerstoffläutern entstandenen Sauerstoffreste im Abstehbereich (70) mittels wasserstoffgespülten Edelmetallelementen (90) wieder entfernt werden.

8. Verfahren nach einem der vorhergehenden Ansprüche **dadurch gekennzeichnet, dass** der Sauerstoffgehalt der Glasschmelze mittels einer Sonde (60, 110) gemessen und das hierbei gewonnene Messsignal zur Steuerung des Sauerstoff- und/oder Wasserstoffpartialdruckes verwendet wird.

9. Vorrichtung zur Durchführung des Verfahrens nach einem der Ansprüche 1 bis 8, umfassend eine Schmelzwanne (10) mit einem Bereich (30) zum Läutern einer Wasser und Hydroxylgruppen enthaltenden Glasschmelze, **dadurch gekennzeichnet, dass** im Bereich (30) zum Läutern der Glasschmelze ein Edelmetallelement (40) angeordnet ist, das eine der Glasschmelze zugewandte Seite sowie eine der Glasschmelze abgewandte mit Sauerstoff beaufschlagbare Seite aufweist.

10. Vorrichtung nach Anspruch 9, **dadurch gekennzeichnet, dass** das Edelmetallelement (40) der Wannenboden des Läuterbereichs (30) ist.

11. Vorrichtung nach Anspruch 9 oder 10, **dadurch gekennzeichnet, dass** das Edelmetallelement (40) ein mechanischer Rührer ist.

12. Verwendung von nach einem der Ansprüche 1 bis 8 oder mit einer Vorrichtung nach einem der Ansprüche 9 bis 11 erhaltenen Glases zur Herstellung von LCDs, TFTs, Monitoren, Fernsehbildschirmen, optischen Linsen, Kochgeschirr, Mikrowellengeschirr, elektronischen Geräten, Kochfeldern, Fenstergläsern, Lampengläsern und Displaygläsern.

## Claims

1. Process for the production of glass, in which molten glass containing water and/or containing hydroxyl groups is refined in tanks (10) using oxygen, **characterized in that** at least one noble metal element (40) which has an outer surface facing the melt on the glass side and an inner surface facing away from the molten glass and capable of being brought into contact with gas is arranged in the molten glass, and the surface facing away from the molten glass is brought into contact with oxygen or with an oxygen-containing gas mixture.

2. Process according to Claim 1, **characterized in that** the melting tank (10) itself is used as noble metal element (40).

3. Process according to either of the preceding claims, **characterized in that** the noble metal element (40) comprises at least one pipe arranged immediately above the bottom of the tank.

4. Process according to any of the preceding claims, **characterized in that** a gas-flushable stirrer is used as noble metal element (40).

5. Process according to any of the preceding claims, **characterized in that** platinum, elements of the platinum group, gold, rhenium and alloys thereof which have a sufficiently high hydrogen diffusion coefficient are used as the noble metal.

6. Process according to any of the preceding claims, **characterized in that** the refining is carried out without chemical refining agents.

7. Process according to any of the preceding claims, **characterized in that** the oxygen radicals formed as a result of the refining using oxygen are removed again in the conditioning zone (70) by means of hydrogen-flushed noble metal elements (90).

8. Process according to any of the preceding claims, **characterized in that** the oxygen content of the molten glass is measured by means of a probe (60, 110) and the measurement signal obtained thereby is used for controlling the oxygen partial pressure and/or hydrogen partial pressure.

9. Apparatus for carrying out the process according to any of Claims 1 to 8, comprising a melting tank (10) having a zone (30) for refining molten glass containing water and hydroxyl groups, **characterized in that** a noble metal element (40) which has a side facing the molten glass and a side facing away from the molten glass and capable of being brought into contact with oxygen is arranged in the zone (30) for refining the molten glass.

10. Apparatus according to Claim 9, **characterized in that** the noble metal element (40) is the bottom of the tank in the refining zone (30).

11. Apparatus according to Claim 9 or 10,
**characterized in that** the noble metal element (40) is a mechanical stirrer.

12. Use of glass obtained according to any of Claims 1 to 8 or using an apparatus according to any of Claims 9 to 11 for the production of LCDs, TFTs, monitors, television screens, optical lenses, cooking pots, microwave dishes, electronic devices, hobs, window glasses, lamp glasses and display glasses.

## Revendications

1. Procédé de fabrication de verre, dans lequel du verre fondu qui contient de l'eau et/ou des groupes hydroxyle est affiné à l'oxygène dans des cuves (10), **caractérisé en ce que** l'on dispose dans le verre fondu au moins un élément (40) en métal précieux dont une surface extérieure est tournée vers le bain de verre fondu et dont une surface intérieure non tournée vers le verre fondu peut être balayée par du gaz, et **en ce que** l'on alimente la surface non tournée vers le verre fondu en oxygène ou en un mélange de gaz qui contient de l'oxygène.

2. Procédé selon la revendication 1, **caractérisé en ce que** comme élément (40) en métal précieux, on utilise la cuve de fusion (10) proprement dite.

3. Procédé selon l'une quelconque des revendications précédentes, **caractérisé en ce que** l'élément (40) en métal précieux comporte au moins un tube disposé immédiatement au-dessus du fond de la cuve.

4. Procédé selon l'une quelconque des revendications précédentes, **caractérisé en ce que** comme élément (40) en métal précieux, on utilise un agitateur qui peut être balayé par un gaz.

5. Procédé selon l'une quelconque des revendications précédentes, **caractérisé en ce que** comme métal précieux, on utilise le platine, des éléments du groupe du platine, l'or, le rhénium ainsi que leurs alliages qui présentent un coefficient suffisamment élevé de diffusion de l'hydrogène.

6. Procédé selon l'une quelconque des revendications précédentes, **caractérisé en ce que** l'affinage est réalisé sans agent chimique d'affinage.

7. Procédé selon l'une quelconque des revendications précédentes, **caractérisé en ce que** les résidus d'oxygène qui sont produits par l'affinage à l'oxygène sont éliminés dans la zone de conditionnement (70) au moyen d'éléments (90) en métal précieux balayés par de l'hydrogène.

8. Procédé selon l'une quelconque des revendications précédentes, **caractérisé en ce que** la teneur en oxygène du verre fondu est mesurée au moyen d'une sonde (60, 110) et **en ce que** le signal de mesure ainsi obtenu est utilisé pour la commande de la pression partielle d'oxygène et/ou d'hydrogène.

9. Dispositif en vue de la mise en oeuvre du procédé selon l'une quelconque des revendications 1 à 8, qui comprend une cuve de fusion (10) qui présente une zone (30) d'affinage de verre fondu qui contient de l'eau et des groupes hydroxyle, **caractérisé en ce que** dans la zone (30) d'affinage du verre fondu est disposé un élément (40) en métal précieux dont un côté est tourné vers le verre fondu et dont un côté non tourné vers le verre fondu peut être balayé par de l'oxygène.

10. Dispositif selon la revendication 9, **caractérisé en ce que** l'élément (40) en métal précieux est le fond de la cuve de la zone d'affinage (30).

11. Dispositif selon la revendication 9 ou 10, **caractérisé en ce que** l'élément (40) en métal précieux est un agitateur mécanique.

12. Utilisation du verre obtenu par un procédé selon l'une quelconque des revendications 1 à 8 ou avec un dispositif selon l'une quelconque des revendications 9 à 11 pour la fabrication de LCD, de TFT, d'écrans, d'écrans de télévision, de lentilles optiques, de vaisselle de cuisson, de vaisselle pour micro-ondes, d'appareils électroniques, de plaques de cuisson, de verres de fenêtres, de verres de lampes et de verres d'écrans.
